**Europäisches Patentamt**

**European Patent Office**

**Office européen des brevets**

(11) Veröffentlichungsnummer: **0 228 588**
**A1**

(12) # EUROPÄISCHE PATENTANMELDUNG

(21) Anmeldenummer: 86116767.4

(22) Anmeldetag: 02.12.86

(51) Int. Cl.⁴: **F 02 B 29/04**
**F 02 B 33/44**

(30) Priorität: 18.12.85 DE 3544737

(43) Veröffentlichungstag der Anmeldung:
15.07.87 Patentblatt 87/29

(84) Benannte Vertragsstaaten:
DE FR GB IT SE

(71) Anmelder: Iveco Magirus Aktiengesellschaft
Schillerstrasse 2
D-7900 Ulm/Donau(DE)

(72) Erfinder: Alweswerth, Reinhard, Dr.-Ing.
Kernerstrasse 30
D-7900 Ulm(DE)

(74) Vertreter: Socha, Peter
Iveco Magirus AG Postfach 2740 Schillerstrasse 2
D-7900 Ulm(DE)

(54) **Brennkraftmaschine mit Abgasturbolader.**

(57) Bei einer Brennkraftmaschine (1) mit Abgasturbolader (2) auf der einen Motorenseite und stirnseitig geführter Ladeleitung (3) zur anderen Motorenseite befindet sich zumindest an der Stirnseite des Motorblocks (4) ein austauschbares Leitungsstück in der Ladeleitung, welches ein einziges durchgehendes Rohrstück (5) mit im wesentlichen gleichem Durchmesser oder ein Ladeluftkühler (6) mit Anschlußstutzen (7) sein kann. Dadurch kann für beide Aufladungsmöglichkeiten (gekühlt oder ungekühlt) im Prinzip die gleiche Luftführung verwendet werden, was mit einer Vereinheitlichung beider Varianten einhergeht und nur eine Grundausstattung eines Motors voraussetzt (Figuren 3 und 5).

Fig. 4

Fig. 6

## Beschreibung

Die Erfindung betrifft eine Brennkraftmaschine mit Abgasturbolader und Ladeleitung.

Nach dem Stand der Technik werden für Motoren mit und ohne Ladeluftkühlung bislang zwei verschiedene Ladeleitungsanordnungen verwendet.

Bei Motoren ohne Ladeluftkühlung wird die verdichtete Luft vom Abgasturbolader oder Kompressor aus durch Rohre auf die andere Motorenseite geführt und gelangt dort in alle Zylinder. Diese Rohre liegen über oder unter dem Motor.

Bei Motoren mit Ladeluftkühlung wird die verdichtete Luft um die Stirnseite des Motorblocks herumgeführt, wobei der Ladeluftkühler in der Ladeleitung eingebaut ist (z.B. DE-PS 34 34 173).

Die bisherigen Ausführungen ohne Ladeluftkühlung beanspruchen relativ großen Bauraum, insbesondere in vertikaler Richtung. Ferner werden Wartungsarbeiten am Motor stark beeinträchtigt, insbesondere bei Verlegung der Ladeluftrohre über dem Motor.

Aufgabe der Erfindung ist die Schaffung einer Brennkraftmaschine mit Abgasturbolader der eingangs genannten Art, die bei einfachem Aufbau eine derartige Ladeleitungsanordnung besitzt, die für beide Aufladungsmöglichkeiten, also mit und ohne Ladeluftkühlung, im Prinzip die gleiche Luftführung verwendet.

Gelöst wird die der Erfindung zugrundeliegende Aufgabe durch die im kennzeichnenden Teil des Anspruchs 1 angegebenen Mittel.

Vorteilhaft weitergebildet wird der Erfindungsgegenstand durch die Merkmale der Ansprüche 2 bis 4.

Im besonderen kennzeichnet sich die Erfindung durch ein zumindest an der Stirnseite des Motorblocks der Brenn- kraftmaschine austauschbares Leitungsstück der Ladelei- tung zwischen Abgasturbolader und Ladelufteinlaß, wobei das austauschbare Leitungsstück ein einziges durchgehendes Rohrstück mit im wesentlichen gleichen Durchmesser oder ein Ladeluftkühler mit Anschlußstutzen sein kann. Das austauschbare Leitungsstück besitzt in Motordraufsicht im wesentlichen U-Form.

Zweckmäßigerweise ist der Abgasturbolader auf der einen Motorblockseite mit nach unten weisender Ausgangsöffnung zur Ladeleitung angeordnet, während auf der anderen Motorblockseite eine Ladelufteinlaßverzweigung gelegen ist, deren Einlaßöffnung der Ladeleitung ebenfalls nach unten weist.

Das einzige durchgehende Rohrstück kann zumindest teilweise mit Kühlrippen versehen sein.

Durch die Erfindung wird mithin ein Motorenbaukastensystem eingerichtet, welches beide Varianten (gekühlt/ ungekühlt) vereinheitlicht und bei dem einfach der Ladeluftkühler nichtgewünschtenfalls durch ein einfaches Verbindungsrohr ersetzt wird, wenn keine Ladeluftkühlung erfolgen soll. Das Baukastensystem bringt es mit sich, daß ein einziger Grundmotor benötigt wird. Die Unterschiede werden rein durch die Kühlanlage herbeigeführt. Besonderer Vorteil hierbei ist gegenüber bekannten Aus- führungsvarianten ungekühlter Ladeluftleitungen der ge-

ringere Platzbedarf, insbesondere in vertikaler Richtung, was mit einer geringeren Einbauhöhe einhergeht. Zugleich ist eine bessere Zugänglichkeit des Motors bei Wartungsarbeiten gegeben. Das Baukastensystem führt zu einer Verringerung der Teilevielfalt und einer vereinheitlichten Montage beider Ausführungsvarianten (gekühlt oder ungekühlt), da nur eine einzige Abgasturboladerlage für beide Varianten erforderlich ist. Die Erfindung bringt es ferner mit sich, ohne größere Schwierigkeit die eine Ausführungsvariante auf die andere umzurüsten.

Die Erfindung wird nachfolgend anhand von Ausführungsbeispielen unter Bezugnahme auf die beigefügte Zeichnung näher erläutert; es zeigen:

Fig. 1 und 2    eine schematische Seiten- und Draufsicht einer Brennkraftmaschine mit Abgasturbolader ohne Ladeluftkühlung,

Fig. 3 und 4    die Erfindung entsprechend den Ansichten nach den Fig. 1 und 2 mit Ladeluftkühlung, und

Fig. 5 und 6    die Erfindung entsprechend den Ansichten nach den Fig. 1 und 2 ohne Ladeluftkühlung.

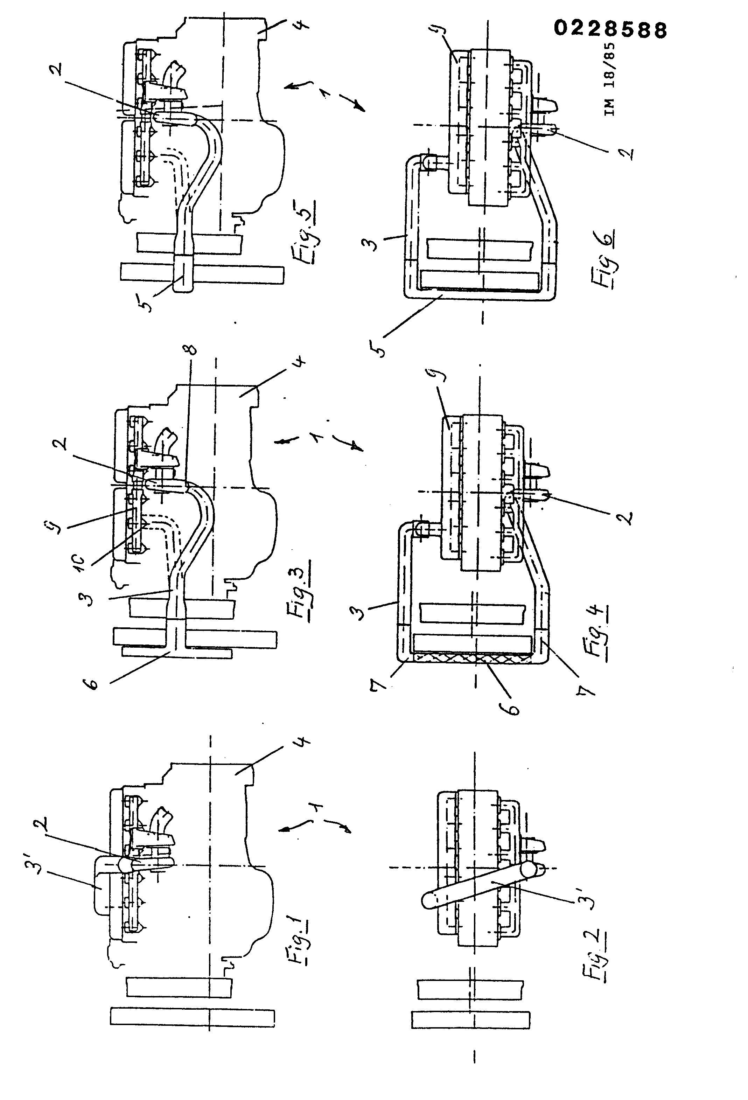

In den Fig. 1 und 2 ist deutlich zu sehen, daß die Luftführung bzw. die Ladeleitung (3') nach bisheriger Art über dem Motorblock (4) der Brennkraftmaschine (1) verlaufend einen höheren Bauraum beansprucht als die Ladeluftleitungen nach den Fig. 3 bis 6 gemäß der Erfindung, bei welcher die Ladeleitung (3) stirnseitig um den Motorblock (4) herumgeführt ist, und zwar im wesentlichen U-förmig, gesehen in der Draufsicht auf den Motorblock (4) gemäß den Fig. 4 und 6.

Während nach dem Stand der Technik gemäß den Fig. 1 und 2 die Austrittsöffnung des Abgasturboladers (2) zur Ladeleitung (3) hin nach oben weist, ist die Ausgangsöffnung (8) zur Ladeleitung (3) in jeder Ausführungsvariante (gekühlt oder ungekühlt) der Erfindung nach unten gerichtet, so daß bei Umrüstarbeiten der Abgasturbolader (2) nicht mehr verdreht werden muß.

Durch die stirnseitige Führung der Ladeleitung (3) gemäß den Fig. 3 bis 6 ergibt sich auch eine sehr gute Zugänglichkeit des Motors von oben, während dies nach dem Stand der Technik gemäß Fig. 2 nicht der Fall ist.

Gemäß den Fig. 3 bis 6 ist ein austauschbares Leitungsstück in der stirnseitig geführten Ladeleitung (3) zwischen Abgasturbolader (2) und Ladelufteinlaßverzweigung (9) auf der anderen Motorblockseite vorgesehen, das gemäß den Fig. 3 und 4 ein Ladeluftkühler (6) mit Anschlußstutzen (7) oder gemäß den Fig. 5 und 6 ein einziges durchgehendes Rohrstück (5) mit im wesentlichen gleichbleibendem Durchmesser sein kann.

Alle in der Beschreibung erwähnten und/oder in der Zeichnung dargestellten neuen Merkmale für sich oder in sinnvoller Kombination sind erfindungswesentlich, auch soweit sie in den Ansprüchen nicht ausdrücklich beansprucht sind.

Brennkraftmaschine mit Abgasturbolader

Patentansprüche

1. Brennkraftmaschine (1) mit Abgasturbolader (2) und Ladeleitung (3), dadurch gekennzeichnet, daß die stirnseitig um den Motorblock (4) geführte Ladeleitung (3) zwischen Abgasturbolader (2) und Ladelufteinlaß zumindest an der Stirnseite des Motorblocks (4) ein austauschbares Leitungsstück aufweist, das ein einziges durchgehendes Rohrstück (5) mit im wesentlichen gleichbleibendem Durchmesser oder ein Ladeluftkühler (6) mit Anschlußstutzen (7) sein kann.

2. Brennkraftmaschine nach Anspruch 1, dadurch gekennzeichnet, daß das austauschbare Leitungsstück in Motordraufsicht im wesentlichen U-Form besitzt.

3. Brennkraftmaschine nach Anspruch 1 oder 2, dadurch gekennzeichnet, daß der Abgasturbolader (2) auf der einen Motorblockseite mit nach unten weisender Ausgangsöffnung (8) zur Ladeleitung (3) angeordnet ist, während auf der anderen Motorblockseite eine Ladelufteinlaßverzweigung (9) gelegen ist, deren Einlaßöffnung (10) der Ladeleitung (3) ebenfalls nach unten weist.

- 6 -

0228588

4. Brennkraftmaschine nach einem der Ansprüche 1 bis 3,
   dadurch gekennzeichnet, daß das einzige durchgehende
   Rohrstück (5) zumindest teilweise mit Kühlrippen versehen ist.

0228588

IM 18/85

Fig.1

Fig 2

Fig.3

Fig.4

Fig.5

Fig 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | AUOMOTIVE ENGINEERING, Band 87, Nr. 11, November 1979, Seiten 80,81, Warrendale, PA, US; D. SCOTT: "Tuned induction uprates turbocharged diesel" * Seite 80, Absatz 3; Figuren * | 1,2 | F 02 B 29/04 F 02 B 33/44 |
| Y | Idem | 3 | |
| X | FR-A- 592 456 (FIAT) * Seite 2, Zeilen 16-58; Figuren 1-8 * | 1,2 | |
| Y | | 3 | |
| A | PATENT ABSTRACTS OF JAPAN, Band 7, Nr. 279 (M-262)[1424], 13. Dezember 1983; & JP-A-58 155 221 (YAMAHA HATSUDOKI K.K.) 14-09-1983 | 4 | **RECHERCHIERTE SACHGEBIETE (Int Cl 4)** F 02 B |
| A | GB-A-1 017 156 (THE ENGLISH ELECTRIC) * Seite 1, Zeilen 38-57; Figur 1 * | 1 | |
| A | DE-A-2 752 498 (VOLVO) * Seite 5, Absatz 4 - Seite 6, Absatz 1; Figur * | 1 | |

Der vorliegende Recherchenbericht wurde für alle Patentansprüche erstellt.

| Recherchenort | Abschlußdatum der Recherche | Prüfer |
|---|---|---|
| DEN HAAG | 18-03-1987 | HAKHVERDI M. |